# EUROPÄISCHE PATENTSCHRIFT

(11) **EP 2 840 293 B1**
(45) Veröffentlichungstag und Bekanntmachung des Hinweises auf die Patenterteilung: **15.02.2017**
(21) Anmeldenummer: 14178553.5
(22) Anmeldetag: 25.07.2014
(51) Int. Cl.: F16M 7/00

(54) **Nivellierschuh**
Levelling shoe
Sabot de nivellement

(30) Priorität: 12.08.2013 DE 102013108720
(43) Veröffentlichungstag der Anmeldung: 25.02.2015
(73) Patentinhaber: Isoloc Schwingungstechnik GmbH, 70499 Stuttgart (DE)
(72) Erfinder: Schürrle, Uwe, 70499 Stuttgart (DE)
(74) Vertreter: Fleck, Hermann-Josef

(56) Entgegenhaltungen:
- CH-A5- 678 451
- DE-A1- 2 516 129
- US-A- 2 123 484

## Beschreibung

Die Erfindung bezieht sich auf einen Nivellierschuh mit einem Stellkeil, der bezüglich einer horizontalen Ebene in seiner Längsrichtung geneigte Keilflächen aufweist und an Anlageflächen einer Grundplatte und einer Kopfplatte gelagert und entlang derselben zum Variieren ihres Abstandes mittels einer Verstelleinheit horizontal in der Längsrichtung verschiebbar ist.

Einen derartigen Nivellierschuh mit einem Stellkeil zeigt die CH 678 451 A5. Bei diesem bekannten Nivellierschuh mit Kopfplatte und Grundplatte und dazwischen verstellbar angeordnetem Keil sind seitlich ab dem Keil, der Kopf- und der Grundplatte Führungsleisten mit schulterartigen Abstufungen ausgebildet.

Ein derartiger Nivellierschuh ist in der OE 44 29 813 C2 angegeben. Bei diesem bekannten Nivellierschuh ist ein Stellkeil mit in Längsrichtung verlaufenden Keilflächen mittels einer Verstelleinheit, die eine in Längsrichtung durch den Stellkeil verlaufende und in diesem drehbar gelagerte Schraubspindel aufweist, zwischen einer Grundplatte und einer Kopfplatte verschiebbar. Dadurch kann ein auf den Nivellierschuh aufgesetzter Gegenstand, wie z. B. eine Maschine in einer Industrieanlage, in ihrer Lage nivelliert werden. Die Grundplatte und die Kopfplatte (Deckplatte) weisen in Längsrichtung entsprechend den Keilflächen geneigte ebene Anlageflächen auf, an denen der Stellkeil mit seinen Keilflächen anliegt, und die ebenen Anlageflächen weisen seitliche Wände auf, an denen der Keil mit Seitenflächen derart anliegt, dass er in Verschieberichtung seitlich geführt ist. Dabei stehen die seitlichen Wände rechtwinklig bezüglich der ebenen Anlageflächen vor und übergreifen den Stellkeil seitlich. Die Kopf- und Grundplatte, der Stellkeil sowie der Verstellmechanismus mit der horizontalen Schraubspindel, die durch einen den Stellkeil vertikal durchsetzenden und in Richtung der Spindelachse unverstellbar in der Grundplatte und der Kopfplatte gehaltenen Schraubbolzen hindurchgeschraubt ist, bedürfen einer exakten Ausbildung, um ein Verkanten durch das erforderliche Spiel zwischen den Teilen zu vermeiden und eine präzise Nivellierfunktion zu erreichen.

Einen weiteren Nivellierschuh mit einem zwischen einer Grundplatte und einer Kopfplatte verstellbaren Stellkeil ist in der EP 2 180 230 81 gezeigt, wobei zum Verstellen ebenfalls eine Verstelleinheit mit einer horizontalen Schraubspindel und einem vertikalen Ankerbolzen vorgesehen ist. Hierbei ist die Lagerung des Ankerbolzens und dessen Verbindung mit einem in der Oberseite der Kopfplatte angeordneten Lagerabschnitt für die Maschine in besonderer Weise ausgebildet, wodurch einerseits die Lagereigenschaften und andererseits auch die Verstelleigenschaften des Nivellierschuhs begünstigt werden.

Die DE 25 16 129 A1 zeigt ein höhenverstellbares Stützelement mit aufeinander gleitenden Schrägflächen. In den Schrägflächen sind quer zur Verstellrichtung ausgebildete Querrippen mit sägezahnartigem Querschnitt vorhanden, wobei die steilere Flanke der Rippe in Steigungsrichtung jeweils auf der Rückseite der Rippe ausgebildet ist.

Ein weiteres höhenverstellbares Stützelement ist in der US 2,123,484 A gezeigt. Eine seitliche Verschiebung wird mittels ineinander greifender Zungen und Nuten vermieden.

Die mit einer in der genannten Weise mit einer Wangenführung ausgestatteten Nivellierschuhe bedürfen auch einer exakten Bearbeitung der seitlichen Flächen des Stellkeils, um eine gute Führung zu erreichen.

Der vorliegenden Erfindung liegt die Aufgabe zugrunde, einen Nivellierschuh der eingangs genannten Art bereit zu stellen, der eine verbesserte Funktion ergibt.

Diese Aufgabe wird mit den Merkmalen des Anspruchs 1 gelöst. Hierbei ist vorgesehen, dass zumindest eine Keilfläche in ihren beiden Seitenabschnitten mit oberen und/oder unteren in Längsrichtung verlaufenden Führungsflächen versehen ist, von denen zumindest ein Teil in einer zur Keilfläche orthogonalen, zur Längsrichtung rechtwinkligen Querebene relativ zu einer horizontalen Geraden in einem schrägen Winkel geneigt ist und dass die Anlagefläche der Kopfplatte und/oder der Grundplatte mit (zu den Führungsflächen) komplementären Führungsgegenflächen versehen ist/sind, um in Längsrichtung zeigende parallele Führungsbahnen mit in Querrichtung schrägen Laufflächen zu bilden.

Die so mit in Querrichtung schrägen Führungsflächen versehene(n) Keilfläche(n) des Stellkeils und mit daran angepassten Führungsgegenflächen versehene(n) Anlagefläche(n) der Kopfplatte und/oder der Grundplatte gebildeten Führungsbahnen ergeben exakte Laufflächen für die Verstellbewegung des Stellkeils zwischen der Grundplatte und der Kopfplatte mit Zentriereigenschaften, wobei Horizonalkräfte quer zur Längsrichtung sich praktisch nicht störend auf die Versteilbarkeit und exakte Führung auswirken.

Eine für den Aufbau und die Funktion vorteilhafte Ausgestaltung besteht darin, dass die Führungsbahnen spiegelsymmetrisch zu einer vertikalen Mittellängsebene angeordnet und ausgebildet sind.

Für eine stabile Auflage mit guten Führungseigenschaften sind ferner die Maßnahmen von Vorteil, dass der Neigungswinkel zumindest zweier Führungsflächen in einem Winkelbereich von 10 bis 80 Grad, insbesondere von 15 bis 60 Grad, vorzugsweise zwischen 10 und 30 Grad liegt. Die relativ flachen Neigungswinkel der Führungsflächen und entsprechend der Führungsgegenflächen ergeben hohe Aufnahmekräfte bei guten Lauf- und Führungseigenschaften. Um horizontalen Querkräften vorteilhaft entgegenzuwirken, können Führungsflächen mit steileren Neigungswinkeln vorgesehen sein, insbesondere in Kombination mit flacheren Führungsflächen.

Für den Aufbau und die Funktion weitere vorteilhafte Maßnahmen bestehen darin, dass auf der Oberseite und auf der Unterseite des Stellkeils gleiche Führungsflächen angeordnet sind, um zusammen mit den zugeordneten Führungsgegenflächen gleiche Führungsbahnen zu bilden.

Eine für den Aufbau und die Funktion vorteilhafte Ausgestaltung ergibt sich ferner dadurch, dass die Führungsbahnen im Querschnitt trapezförmig oder dreieckförmig sind.

Vorteilhafte Ausbildungsmöglichkeiten bestehen dabei darin, dass die Trapezform oder Dreiecksform gleichschenklig oder schiefwinklig ist.

Eine für die Führung und Zentrierung weitere vorteilhafte Ausgestaltung besteht darin, dass eine Führungsbahn mindestens zwei zueinander parallele Laufflächen besitzt und dass zwischen zwei Laufflächen einer Führungsbahn ein längsverlaufender Freiraum zwischen dem Stellkeil und der Grundplatte oder der Kopfplatte gelassen ist.

Weitere vorteilhafte Ausgestaltungsvarianten, womit unterschiedlichen Anforderungen Rechnung getragen werden kann, bestehen darin, dass die Führungsflächen an gegenüber der betreffenden Keilfläche vorspringenden oder zurückgesetzten Abschnitten ausgebildet sind.

Eine vorteilhafte Ausgestaltung wird dadurch erhalten, dass die Verstelleinheit eine in dem Stellkeil drehbar und axial unverschieblich horizontal in Längsrichtung in ihren beiden Endabschnitten gelagerte Schraubspindel aufweist, die einen zentralen Durchbruch des Stellkeils mittig durchsetzt und mit einem mittleren Abschnitt in eine Gewindebohrung eines rechtwinklig zur Spindelachse gerichteten, an der Grundplatte und der Kopfplatte gehaltenen Ankerglieds eingeschraubt ist, so dass beim Drehen der Schraubspindel der Stellkeil in Längsrichtung relativ zu der Grundplatte und der Kopfplatte verschoben und deren Abstand variiert wird.

Die Erfindung wird nachfolgend anhand von Ausführungsbeispielen unter Bezugnahme auf die Zeichnungen näher erläutert. Es zeigen:
- Fig. 1A: einen Nivellierschuh ohne Kopfplatte in perspektivischer Ansicht von schräg oben,
- Fig. 1B: in Teilbildern a), b) und c) einen Nivellierschuh nach Fig. 1A (bei weggelassener Verstelleinheit) mit Stellkeil, Grundplatte und Kopfplatte in perspektivischer Ansicht, den Stellkeil und die Grundplatte in perspektivischer Ansicht sowie eine Vorderansicht des Nivellierschuhs mit einer ersten Ausführungsform von Führungsbahnen,
- Fig. 2: in Teilbildern a), b) und c) entsprechende Ansichten wie Fig. 1B, jedoch mit einem anderen Ausführungsbeispiel der Führungsbahnen,
- Fig. 3: in Teilbildern a), b) und c) einen Nivellierschuh (ohne Verstelleinheit) mit Stellkeil, Grundplatte und Kopfplatte in perspektivischer Ansicht, ein Detail einer Führungsbahn zwischen Stellkeil und Kopfplatte sowie eine Vorderansicht des Nivellierschuhs mit einem weiteren Ausführungsbeispiel der Führungsbahnen und
- Fig. 4: in Teilbildern a), b) und c) entsprechende Ansichten wie Fig. 1B, jedoch mit einem weiteren Ausführungsbeispiel für die Führungsbahnen.

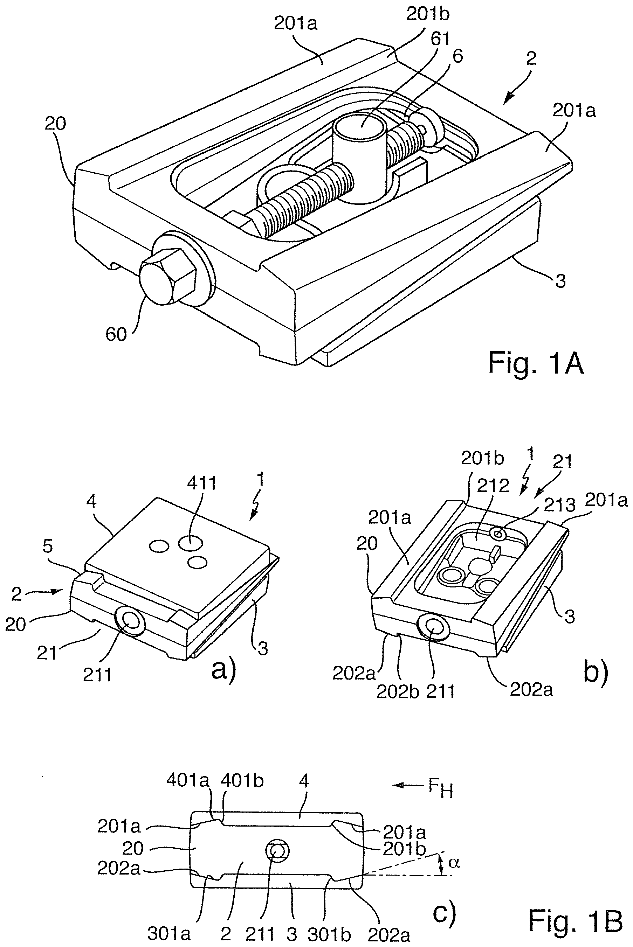

Fig. 1A zeigt als vorliegend wesentliche Komponenten des Nivellierschuhs 1 einen Stellkeil 2 und eine Grundplatte 3. Der Stellkeil 2 besitzt in Längsrichtung des Nivellierschuhs bezüglich einer horizontalen Mittelebene in einem flachen Winkel (von z. B. 10 bis 20 Grad) geneigte Keilflächen, die mit Abschnitten von zugewandten Anlageflächen der Grundplatte 3 bzw. einer (nicht gezeigten) Kopfplatte 4 zusammenwirken, um bei einer Verstellung des Stellkeils 2 mittels einer Verstelleinheit 6 den Abstand zwischen Grundplatte 3 und Kopfplatte 4 zu variieren und dadurch die Lage eines auf der Kopfplatte 4 aufgestellten Gegenstandes, wie z. B. einer Werkzeugmaschine, zu nivellieren. Die Verstelleinheit weist hierzu eine den Stellkeil 2 mittig in Längsrichtung durchsetzende, und in ihm axial unverstellbar gelagerte horizontale Schraubspindel 61 auf, die durch ein Innengewinde eines in der Kopfplatte 4 und der Grundplatte 3 axial unverschieblich gelagerten Ankerglieds 61 geschraubt ist, wie in den eingangs genannten OE 44 29 813 C2 und EP 2 180 230 B1 näher erläutert. Üblicherweise sind mehrere derartige Nivellierschuhe 1 unter einem Maschinenrahmen angeordnet, wobei auf der Kopfplatte 4 eine (nicht gezeigte) Aufnahmeeinrichtung angeordnet ist, wie z. B. in der eingangs genannten EP 2 180 230 B1 ebenfalls gezeigt.

Wie die Fig. 1B in Teilbildern a), b), c) weiter zeigt, sind zwischen dem Stellkeil2 und der Grundplatte 3 einerseits sowie der Kopfplatte 4 andererseits Führungsbahnen 5 ausgebildet. Die jeweilige Führungsbahn 5 ist von in seitlichen Abschnitten der Keilflächen gebildeten Führungsflächen und an den seitlichen Abschnitten der zugewandten Anlageflächen der Grundplatte 3 und der Kopfplatte 4 geformten, angepassten Führungsgegenflächen 301a, 301b bzw. 401a, 401b gebildet. Dabei sind die Führungsbahnen 5 spiegelsymmetrisch bezüglich einer in Längsrichtung verlaufenden, zur horizontalen Mittelebene senkrechten vertikalen Mittellängsebene an den Keilflächen und Anlageflächen angeordnet und ausgebildet. Wie die Fig. 1B in den Teilbildern a), b) und c) zeigt, sind die Führungsflächen 201 a, 201 b auf der oberen (der Kopfplatte 4 zugewandten) Keilfläche im Querschnitt geneigt bezüglich der (gedachten und teilweise real vorhandenen) Ebene der Keilfläche. Die Führungs- flächen 201 a, 201 b sind dabei in gegenüber der Ebene der Keilfläche erhabenen seitlichen Abschnitten ausgebildet, wobei die nach außen (zu dem jeweiligen Längs- rand des Stellkeils 2) abfallenden Führungsflächen 201 a in einem relativ flachen schrägen Winkel a geneigt sind (Neigungswinkel a), während die auf den einander zugekehrten Seiten der Führungsbahn 5 ausgebildeten Führungsflächen 201 b relativ steile Neigungswinkel a besitzen. Beispielsweise beträgt der Neigungswinkel a der äußeren Führungsflächen 201 a zwischen 10 und 45 Grad, vorzugsweise zwischen 10 und 30 Grad, während der Neigungswinkel a der inneren Führungsflächen 201 b vorzugsweise 45 Grad oder mehr beträgt, so dass die inneren Führungsflächen 201b Vorteile zum Aufnehmen seitlicher Horizonalkräfte FH bieten, während die relativ brei- ten äußeren Führungsflächen 201a Vorteile für die vertikale Kraftaufnahme sowie Laufflächen mit guten Gleiteigenschaften bieten. Die schräge Anordnung der Füh- rungsflächen 201a, 201b, vorliegend im Wesentlichen in Form eines schiefwinkligen Dreiecks (mit leichter Rundung im Übergangsbereich zwischen den aneinander grenzenden Führungsflächen), ergibt entsprechend den aufliegenden Gewichtskräften eine gute Zentriertunktion mit exakter Längsführung. Im Einzelnen können die Breite der Führungsflächen 201a, 201b und die Gleiteigenschaften in Kombination mit den betreffenden Führungsgegenflächen 401 a, 401 b der Kopfplatte 4 aufeinander abgestimmt und an unterschiedliche Anforderungen aufzunehmender Kräfte bzw. Maschinen angepasst werden.

Die Führungsbahnen 5 auf der der Grundplatte 3 zugewandten Unterseite des Stellkeils 2 sind vorliegend mit entsprechenden Führungsflächen 202a, 202b ausgestattet, wie die oberen Führungsflächen 201a, 201b und besitzen somit entsprechende Neigungswinkel a und sind symmetrisch zu der vertikalen Mittellängsebene an erhabenen seitlichen Abschnitten der unteren Keilfläche angeordnet und ausgebildet.

Auch die unteren Führungsgegenflächen 301a, 301b an den seitlichen Abschnitten der Anlagefläche der Grundplatte 3 sind entsprechend an die unteren Führungsflächen 202a, 202b angepasst.

Zu beachten ist noch, dass die Anlage zwischen Stellkeil 2 und Grundplatte 3 bzw. Kopfplatte 4 im Bereich der Führungsbahnen 5, insbesondere der gebildeten Laufflächen erfolgt, um gute Gleit- und Führungseigenschaften sowie Zentriereigenschaften zu gewährleisten.

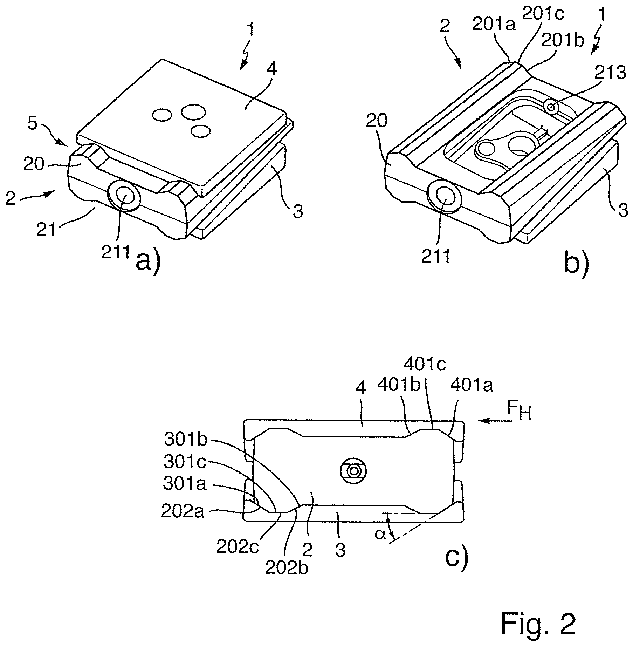

Bei dem in Fig. 2 gezeigten Ausführungsbeispiel sind gegenüber Fig. 1B die Führungsbahnen 5 anders ausgebildet und besitzen im Querschnitt die Form eines gleichschenkligen Trapezes, wobei die äußeren Führungsflächen 201a, 202a betragsmäßig gleichen Neigungswinkel a besitzen wie die inneren Führungsflächen 201b, 202b. Entsprechendes gilt auch für die betreffenden Führungsgegenflächen 401a, 401b bzw. 301a, 301b. Die oberen und unteren Führungsflächen 201 a, 201 b bzw. 202a, 202b sind auch hierbei an erhabenen seitlichen Abschnitten auf den Keilflächen ausgebildet. Die kurzen Trapezseiten, die parallel zur Ebene der Keilfläche verlaufen, bilden weitere Führungsflächen 201c bzw. 202c. Entsprechendes gilt für die oberen und unteren Führungsgegenflächen 401c bzw. 301c an der Kopfplatte 4 bzw. der Grundplatte 3. Die jeweiligen Führungsgegenflächen sind folglich in vertieften Bereichen der Grundplatte 3 bzw. Kopfplatte 4 angeordnet.

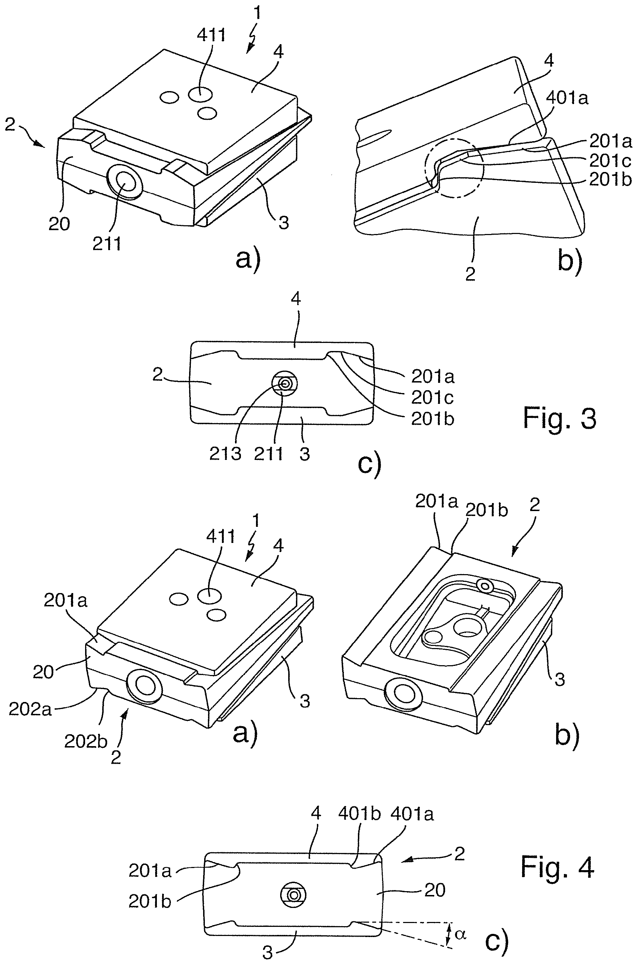

Bei dem Ausführungsbeispiel nach Fig. 3 sind gegenüber Fig. 1B die Führungsbahnen 5 wiederum unterschiedlich ausgebildet. Hierbei besitzt die Führungsbahn 5 im Querschnitt die Form eines schiefwinkligen Trapezes, wobei die inneren Führungsflächen 201 b bzw. 202b steiler angeordnet sind, als die äußeren Führungsflächen 201a bzw. 202a. Die Neigungswinkel a können z. B. wie bei dem Ausführungsbeispiel nach Fig. 1B gewählt sein. Auch hierbei nehmen die äußeren Führungsflächen 201a, 202a vor allem die Vertikalkräfte auf, während die inneren Führungsflächen 201b bzw. 202b horizontalen seitlichen Verschiebekräften FH entgegenwirken. Im Bereich der zur Ebene der Keilfläche parallelen kurzen Trapezseite liegen bei diesem Ausführungsbeispiel die zugeordneten Führungsgegenflächen 401c bzw. 301c nicht an, sondern zwischen diesen Führungsflächen und Führungsgegenflächen ist ein Freiraum bzw. Spalt gebildet, wodurch die durch die schrägen Führungsflächen 201 a, 201 b, 202a, 202b im Zusammenwirken mit den betreffenden schrägen Führungsgegenflächen 401a, 401b, 301a, 301b eine verbesserte Führungs- und Zentriertunktion und Vorteile bei der Aufnahme von Querkräften ergeben.

Bei dem in Fig. 4 gezeigten Ausführungsbeispiel sind im Unterschied zu Fig. 1B die Schrägflächen 201a, 201b bzw. 202a, 202b in vertieften seitlichen Abschnitten der Keilflächen ausgebildet, während die betreffenden Führungsgegenflächen in erhabenen Abschnitten der Anlageflächen der Grundplatte 3 bzw. Kopfplatte 4 ausgebildet sind. Hierbei ist der Querschnitt bezüglich der Form der Führungsbahn und Neigungswinkel a ähnlich wie in Fig. 1B.

Die Grundplatte 3, Kopfplatte 4 und der Stellkeil 2 werden vorteilhaft durch Schmieden hergestellt, wodurch eine erheblich erhöhte Festigkeit und Belastbarkeit gegenüber den herkömmlichen aus Gussmaterial hergestellten Bauteilen erreicht wird. Durch diese Bearbeitung und wegen des geringeren Anteils an Reibflächen werden auch die erforderlichen Verstellkräfte beim Nivellieren reduziert.

Je nach Anwendungsfall und Anforderungen können die Führungsbahnen in ihren Gleiteigenschaften und hinsichtlich der Aufnahme seitlicher Kräfte gewählt werden, wobei stets eine gute Zentriertunktion und Nivellierung der aufzunehmenden Maschine erreicht werden.

## Patentansprüche

1. Nivellierschuh mit einem Stellkeil (2), der bezüglich einer horizontalen Ebene in seiner Längsrichtung geneigte Keilflächen aufweist und an Anlageflächen einer Grundplatte (3) und einer Kopfplatte (4) gelagert und entlang derselben zum Variieren ihres Abstandes mittels einer Verstelleinheit horizontal in der Längsrichtung verschiebbar ist,
**dadurch gekennzeichnet,**
**dass** zumindest eine Keilfläche in ihren beiden Seitenabschnitten (20) mit obe ren und/oder unteren in Längsrichtung verlaufenden Führungsflächen (201 a, 201 b, 201 c; 202a, 202b, 202c) versehen ist, von denen zumindest ein Teil in einer zur Keilfläche orthogonalen, zur Längsrichtung rechtwinkligen Querebe ne relativ zu einer horizontalen Geraden in einem schrägen Winkel (a) geneigt ist und
**dass** die Anlagefläche der Kopfplatte (4) und/oder der Grundplatte (3) mit komplementären Führungsgegenflächen (401 a, 401 b, 401 c; 301 a, 301 b, 301 c) versehen ist/sind, um in Längsrichtung zeigende parallele Führungsbahnen (5) mit in Querrichtung schrägen Laufflächen zu bilden, wobei die Führungsbahnen (5) im Querschnitt trapezförmig oder dreieckförmig sind.

2. Nivellierschuh nach Anspruch 1,
**dadurch gekennzeichnet,**
**dass** die Führungsbahnen (5) spiegelsymmetrisch zu einer vertikalen Mittellängsebene angeordnet und ausgebildet sind.

3. Nivellierschuh nach Anspruch 1 oder 2,
**dadurch gekennzeichnet,**
**dass** der Neigungswinkel (α) zumindest zweier Führungsflächen (401 a, 401 b; 301a, 301b) in einem Winkelbereich von 10 bis 80 Grad, insbesondere von 15 bis 60 Grad, vorzugsweise zwischen 10 und 30 Grad liegt.

4. Nivellierschuh nach einem der vorhergehenden Ansprüche,
**dadurch gekennzeichnet,**
**dass** auf der Oberseite und auf der Unterseite des Stellkeils (2) gleiche Führungsflächen (201 a, 201 b, 201 c; 202a, 202b, 202c) angeordnet sind, um zusammen mit den zugeordneten Führungsgegenflächen (401 a, 401 b, 401 c; 301 a, 301 b, 301 c) gleiche Führungsbahnen (5) zu bilden.

5. Nivellierschuh nach einem der vorhergehenden Ansprüche,
**dadurch gekennzeichnet,**
**dass** die Trapezform oder Dreiecksform gleichschenklig oder schiefwinklig ist.

6. Nivellierschuh nach einem der vorhergehenden Ansprüche,
**dadurch gekennzeichnet,**
**dass** eine Führungsbahn (5) mindestens zwei zueinander parallele Laufflächen besitzt und
**dass** zwischen zwei Laufflächen einer Führungsbahn (5) ein längsverlaufender Freiraum zwischen dem Stellkeil (2) und der Grundplatte (3) oder der Kopfplat te (4) gelassen ist.

7. Nivellierschuh nach einem der vorhergehenden Ansprüche,
**dadurch gekennzeichnet,**
**dass** die Führungsflächen an (201 a, 201 b, 201 c; 202a, 202b, 202c) gegen über der betreffenden Keilfläche vorspringenden oder zurückgesetzten Ab schnitten ausgebildet sind.

8. Nivellierschuh nach einem der vorhergehenden Ansprüche,
**dadurch gekennzeichnet,**
**dass** die Verstelleinheit (6) eine in dem Stellkeil (2) drehbar und axial unver schieblich horizontal in Längsrichtung in ihren beiden Endabschnitten gelager te Schraubspindel (60) aufweist, die einen zentralen Durchbruch des Stellkeils (2) mittig durchsetzt und mit einem mittleren Abschnitt in eine Gewindeboh rung eines rechtwinklig zur Spindelachse gerichteten, an der Grundplatte (3) und der Kopfplatte (4) gehaltenen Ankerglieds (61) eingeschraubt ist, so dass beim Drehen der Schraubspindel der Stellkeil (2) in Längsrichtung relativ zu der Grundplatte (3) und der Kopfplatte (4) verschoben und deren Abstand vari iert wird.

## Claims

1. A leveling shoe with an adjusting wedge (2), which regarding a horizontal level exhibits inclined wedge surfaces lengthwise and is mounted on the contact surfaces of a base plate (3) and a head plate (4), and is horizontally adjustable lengthwise along these by means of an adjustment unit for the variation of their spacing,
**characterized in that**
at least one wedge surface in its two side sections (20) is provided with upper and/or lower guide surfaces (201 a, 201 b, 201 c; 202a, 202b, 202c) running lengthwise, of which at least a part is inclined at a slanted angle in a traverse plane orthogonal to the wedge surface, rectangular lengthwise in relation to a horizontal straight, and
**in that** the contact surfaces of the head plate (4) and/or of the base plate (3) is/are provided with complementary guide counterfaces (401a, 401b, 401c; 301a, 301b, 301c), in order to form parallel slideways (5) pointing lengthwise with slanted running surfaces in transverse direction, wherein the slideways (5) are trapezoidal or triangular in the cross-section.

2. The leveling shoe according to claim 1,
**characterized in that**
the slideways (5) are arranged and designed symmetrically identical to a vertical longitudinal center plane.

3. The leveling shoe according to claim 1 or 2,
**characterized in that**
the inclination angle (α) of at least two guide surfaces (401 a, 401 b; 301 a, 301 b) lies in an angle range from 10 to 80 degrees, in particular from 15 to 60 degrees, preferably between 10 and 30 degrees.

4. The leveling shoe according to any of the preceding claims,
**characterized in that**
equal guide surfaces (201 a, 201b, 201c; 202a, 202b, 202c) are arranged on the top and bottom of the adjusting wedge (2), in order to form equal slideways (5) together with the associated complementary guide counterfaces (401 a, 401 b, 401c;301a,301b,301c).

5. The leveling shoe according to any of the preceding claims,
**characterized in that**
the trapezoidal shape and the triangular shape is isosceles or oblique-angled.

6. The leveling shoe according to any of the preceding claims,
**characterized in that**
a slideway (5) has at least two running surfaces parallel to each other and that a longitudinal open space between the adjusting wedge (2) and the base plate (3) or the head plate (4) is left between two running surfaces of a slideway (5).

7. The leveling shoe according to any of the preceding claims,
**characterized in that**
the guide surfaces (201a, 201b, 201c; 202a, 202b, 202c) are designed at sections that are protruding or recessed with respect to the respective wedge surface.

8. The leveling shoe according to any of the preceding claims,
**characterized in that**
the adjustment unit (6) exhibits a screw spindle (60), rotatable in the adjusting wedge (2) and, axially fixed, mounted horizontally lengthwise in its two end sections, which centrally creates a central opening of the adjusting wedge (2) and which is screwed with a central section into a threaded hole of an anchor member (61) positioned at a right angle to the spindle axis and held on the base plate (3) and the head plate (4), so that, when turning the screw spindle, the adjusting wedge (2) is slid lengthwise in relation to the base plate (3) and the head plate (4) and their spacing is varied.

## Revendications

1. Sabot de nivellement comportant un coin de réglage (2) qui présente par rapport à un plan horizontal, des surfaces en forme de coin inclinées dans sa direction longitudinale, et est placé sur des surfaces d'appui, une plaque de base (3) et une plaque de tête (4) et peut être décalé le long de celles-ci pour faire varier leur espacement au moyen d'une unité de réglage horizontalement dans la direction longitudinale,
**caractérisé en ce que**
l'au moins une surface en forme de coin est dotée dans ses deux segments latéraux (20) de surfaces de guidage (201 a, 201 b, 201 c ; 202a, 202b, 202c) évoluant en haut et/ou ou en bas dans une direction longitudinale, dont au moins une partie est inclinée dans un plan transversal orthogonal par rapport à la surface en forme de coin, rectangulaire par rapport à la direction longitudinale, par rapport à une droite horizontale dans un angle oblique (a) et
**en ce que** la surface d'appui de la plaque de tête (4) et/ou de la plaque de base (3) est/sont dotée(s) de surfaces de guidage opposées complémentaires (401 a, 401 b, 401c ; 301 a, 301 b, 301c) pour former des pistes de guidage (5) parallèles orientées en direction longitudinale avec des surfaces de roulement oblique en direction perpendiculaire, dans lequel les pistes de guidages (5) sont de section trapézoïdale ou triangulaire.

2. Sabot de nivellement selon la revendication 1,
**caractérisé en ce que** les pistes de guidage (5) sont disposées et formées de façon symétrique en miroir par rapport à un plan médian vertical.

3. Sabot de nivellement selon la revendication 1 ou 2,
**caractérisé en ce que**
l'angle d'inclinaison (α) d'au moins deux surfaces de guidage (401 a, 401b ; 301a, 301b) se situe dans une plage angulaire de 10 à 80 degrés, en particulier, de 15 à 60 degrés, de préférence, entre 10 et 30 degrés.

4. Sabot de nivellement selon l'une des revendications précédentes,
**caractérisé en ce que**
sur la face supérieure et sur la face inférieure du coin de réglage (2), des surfaces de guidage identiques (201 a, 201 b, 201 c ; 202a, 202b, 202c) sont disposées, pour former conjointement avec les surfaces de guidages opposées attribuées (401 a, 401 b, 401 c ; 301 a, 301 b, 301c) des pistes de guidage identiques (5).

5. Sabot de nivellement selon l'une des revendications précédentes,
**caractérisé en ce que**
la forme trapézoïdale ou la forme triangulaire est isocèle ou oblique.

6. Sabot de nivellement selon l'une des revendications précédentes,
**caractérisé en ce que**
une piste de guidage (5) possède au moins deux surfaces de roulement parallèles l'une par rapport à l'autre et
**en ce que**, entre deux surfaces de roulement d'une piste de guidage (5) est laissé un espace libre évoluant longitudinalement entre le coin de réglage (2) et la plaque de base (3) ou la plaque de tête (4).

7. Sabot de réglage selon l'une des revendications précédentes,
**caractérisé en ce que**
les surfaces de guidage (201a, 201b, 201 c ; 202a, 202b, 202c) sont formées par rapport aux surfaces formant un coin concernées, de segments proéminents ou en retrait.

8. Sabot de nivellement selon l'une des revendications précédentes,
**caractérisé en ce que**
l'unité de réglage (6) présente une tige filetée (60) pouvant tourner dans le coin de réglage (2) et placée axialement de façon non décalable horizontalement dans la direction longitudinale dans ses deux segments terminaux, qui traverse une perforation centrale du coin de réglage (2) sur le plan médian et est vissée avec un segment médian dirigé dans un alésage fileté d'un élément d'ancrage (61) maintenu à angle droit par rapport à l'axe de la tige, sur la plaque de base (3) et la plaque de tête (4), de sorte que lors de la rotation de la tige filetée, le coin de réglage (2) soit décalé dans la direction longitudinale par rapport à la plaque de base (3) et la plaque de tête (4) et que leur espacement varie.
